# EUROPÄISCHE PATENTSCHRIFT

(11) **EP 2 645 494 B1**
(45) Veröffentlichungstag und Bekanntmachung des Hinweises auf die Patenterteilung: **14.10.2015**
(21) Anmeldenummer: 13159399.8
(22) Anmeldetag: 15.03.2013
(51) Int. Cl.: H01S 3/10, H01S 3/034, H01S 3/223, H01S 3/07, H01S 3/225

(54) **Vorrichtung zur Verstärkung eines Laserstrahls**
Device for laser beam amplification
Dispositif pour amplifier un rayon laser

(30) Priorität: 30.03.2012 DE 102012205308
(43) Veröffentlichungstag der Anmeldung: 02.10.2013
(73) Patentinhaber: TRUMPF Laser-und Systemtechnik GmbH, 71254 Ditzingen (DE)
(72) Erfinder: Schulz, Joachim, 70839 Gerlingen (DE); Mueller, Oliver, 71696 Möglingen (DE)
(74) Vertreter: Prüfer & Partner GbR European Patent Attorneys

(56) Entgegenhaltungen:
- US-A- 3 575 671
- US-A1- 2002 105 994
- US-A1- 2007 091 973
- US-A1- 2010 117 009
- TILAK HEWAGAMA ET AL: "ANOMALOUS GAIN IN AN ISOTOPICALLY MIXED CO2 LASER AND APPLICATION TO ABSOLUTE WAVELENGTH CALIBRATION", IEEE JOURNAL OF QUANTUM ELECTRONICS, IEEE SERVICE CENTER, PISCATAWAY, NJ, USA, Bd. 27, Nr. 3, 1. März 1991 (1991-03-01), Seiten 465-470, XP000371680, ISSN: 0018-9197, DOI: 10.1109/3.81348

## Beschreibung

Die Erfindung betrifft eine Vorrichtung zur Verstärkung eines Laserstrahls, insbesondere eine Vorrichtung, in der der Laserstrahl in einzelnen Verstärkerstufen analysiert wird.

Es sind Vorrichtungen zum Verstärken von Laserstrahlen bekannt, die insbesondere von mehrstufigen Verstärkersystemen gebildet werden. Um den Laserstrahl zwischen jeder Verstärkerstufe zu analysieren, verwenden diese Vorrichtungen zusätzliche teiltransmittive Komponenten, wie z.B. teiltransmittive Spiegel.

Ein Einsatz dieser teiltransmittiven Spiegel bedeutet aber, dass zusätzliche Bauteile vorgesehen werden müssen. Durch den Einsatz von zusätzlichen Bauteilen wird jedoch der Aufbau aufwendiger, da zusätzliche Teile verwendet werden müssen und zusätzlicher Platzbedarf erforderlich ist.

Darüber hinaus ist es auf Grund der Teiltransmission der Spiegel nur schwer möglich, die Spiegel von hinten zu kühlen.

Dokument US 2010/0117009 A1 offenbart eine EUV- (Extreme-Ultra-Violet-) Lichtquelleneinrichtung, die Verstärkerkammern aufweist, wobei in einigen Ausführungsformen auch ein Sensor vorgesehen ist. Der Sensor weist ein Fenster als transmittierendes optisches Element auf, das unter einem Kippwinkel zu einer optischen Achse eines Laserstrahls angeordnet ist. Ein rückreflektierter Laserstrahl wird durch eine Detektionseinheit erfasst.

Beim Einsatz eines Laserstrahls ist es jedoch auch möglich, dass rückwärts laufende Strahlen in entgegengesetzter Richtung zu dem Laserstrahl auftreten. Diese rückwärts laufenden Strahlen können durch "selflasing" oder Reflexionen eines vorwärts laufenden Strahls an Bauteilen des Lasersystems oder bei der Bearbeitung eines Targets durch Reflexionen an diesem Target auftreten. Um diese rückwärts laufenden Strahlen zu analysieren, sind beispielsweise weitere teiltransmittive Spiegel erforderlich.

Der Erfindung liegt die Aufgabe zu Grunde, die oben genannten Nachteile zu eliminieren und eine Vorrichtung zur Verstärkung eines Laserstrahls, insbesondere einer Vorrichtung mit einem einfachen Aufbau bereitzustellen, wobei die Vorrichtung eine kompakte Bauform ermöglicht, und die Vorrichtung eine reduzierte Anzahl von Bauteilen aufweist.

Die Aufgabe wird durch eine Vorrichtung gemäß Anspruch 1 gelöst. Weiterentwicklungen der Erfindung sind Gegenstand der abhängigen Ansprüche.

Durch das Vorsehen einer Vorrichtung gemäß Anspruch 1, wird ein Laserstrahl an einem zum Austreten des Laserstrahls vorgesehenen transmittierenden optischen Element teilweise rückreflektiert. Ein rückreflektierter Strahl wird innerhalb der Verstärkerkammer zu einer Detektionseinheit gelenkt. Dadurch kann die Vorrichtung kompakt aufgebaut werden und eine reduzierte Anzahl von Bauteilen kann verwendet werden.

Die Erfindung wird anhand eines Ausführungsbeispiels unter Bezugnahme auf die beigefügten Zeichnungen erläutert.
- Fig. 1: zeigt einen CO2-Gaslaser in einer Ausführungsform mit einem quadratisch gefalteten Laserresonator;
- Fig. 2: ist eine prinzipielle Darstellung eines ersten Beispiels einer Vorrichtung zum Verstärken eines Laserstrahls mit einer Detektionseinheit innerhalb einer Verstärkerkammer. Dieses Beispiel ist keine Ausführungsform der Erfindung;
- Fig. 3: ist eine prinzipielle Darstellung eines zweiten Erfindung; Beispiels der Vorrichtung mit der Detektionseinheit außerhalb der Verstärkerkammer. Dieses Beispiel ist keine Ausführungsform der Erfindung;
- Fig. 4: ist eine prinzipielle Darstellung eines dritten Beispiels der Vorrichtung mit zwei benachbarten Verstärkerkammern, das keine Ausführungsform der Erfindung ist;
- Fig. 5: ist eine prinzipielle Darstellung eines vierten Beispiels der Vorrichtung mit drei benachbarten Räumen, das keine Ausführungsform der Erfindung ist;
- Fig. 6: ist eine prinzipielle Darstellung der Vorrichtung mit einem Umlenkspiegel in der Verstärkerkammer;
- Fig. 7: ist eine prinzipielle Darstellung von Strahlengängen in der Vorrichtung, bei der ein Umlenkspiegel sowohl für den Laserstrahl als auch für einen reflektierten Strahl verwendet wird;
- Fig. 8: zeigt einen Strahlverlauf einer weiteren alternativen Ausführungsform der Vorrichtung mit zwei Umlenkspiegeln; und
- Fig. 9: ist eine prinzipielle Darstellung eines weiteren Beispiels der Vorrichtung, wobei sowohl vorwärts laufende als auch rückwärts laufende Laserstrahlen analysiert werden.

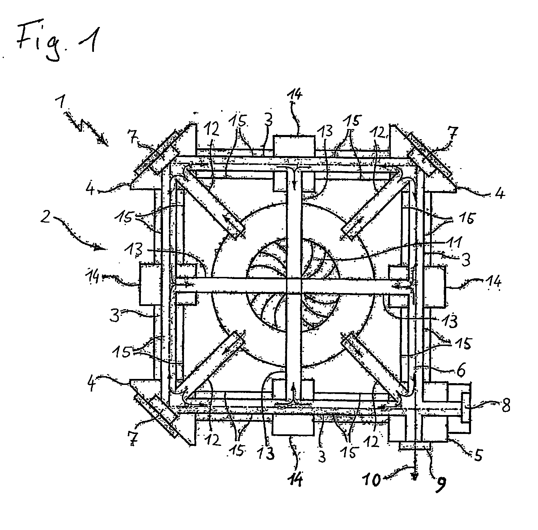

Ein in Fig. 1 gezeigte CO₂-Gaslaser 1 weist einen quadratisch gefalteten Laserresonator 2 mit vier sich aneinander anschließenden Laserentladungsrohren 3 auf, die über Eckgehäuse 4, 5 miteinander verbunden sind. Ein in Richtung der Achsen der Laserentladungsrohre 3 verlaufender Laserstrahl 6 ist strichpunktiert dargestellt. Umlenkspiegel 7 in den Eckgehäusen 4 dienen der Umlenkung des Laserstrahls 6 um jeweils 90°. Im Eckgehäuse 5 sind ein Rückspiegel 8 und ein für die Laserwellenlänge teiltransmissiver Auskoppelspiegel 9 angeordnet. Der Rückspiegel 8 ist für die Laserwellenlänge hochreflektierend ausgebildet und reflektiert den Laserstrahl 6 um 180°, so dass die Laserentladungsrohre 3 in entgegen gesetzter Richtung erneut durchlaufen werden. Ein Teil des Laserstrahles 6 wird an dem teiltransmissiven Auskoppelspiegel 9 aus dem Laserresonator 2 ausgekoppelt, der andere reflektierte Teil verbleibt im Laserresonator 2 und durchläuft die Laserentladungsrohre 3 erneut. Der über den Auskoppelspiegel 9 aus dem Laserresonator 2 ausgekoppelte Laserstrahl ist mit 10 bezeichnet. Im Zentrum des gefalteten Laserresonators 2 ist als Druckquelle für Lasergas ein Radialgebläse 11 angeordnet, das über Zufuhrleitungen 12 für Lasergas mit den Eckgehäusen 4, 5 in Verbindung steht. Absaugleitungen 13 verlaufen zwischen Absauggehäusen 14 und dem Radialgebläse 11. Die Strömungsrichtung des Lasergases im Innern der Laserentladungsrohre 3 sowie in den Zufuhr- und Absaugleitungen 12, 13 ist durch Pfeile veranschaulicht. Die Anregung des Lasergases erfolgt über Elektroden 15, die benachbart zu den Laserentladungsrohren 3 angeordnet sind.

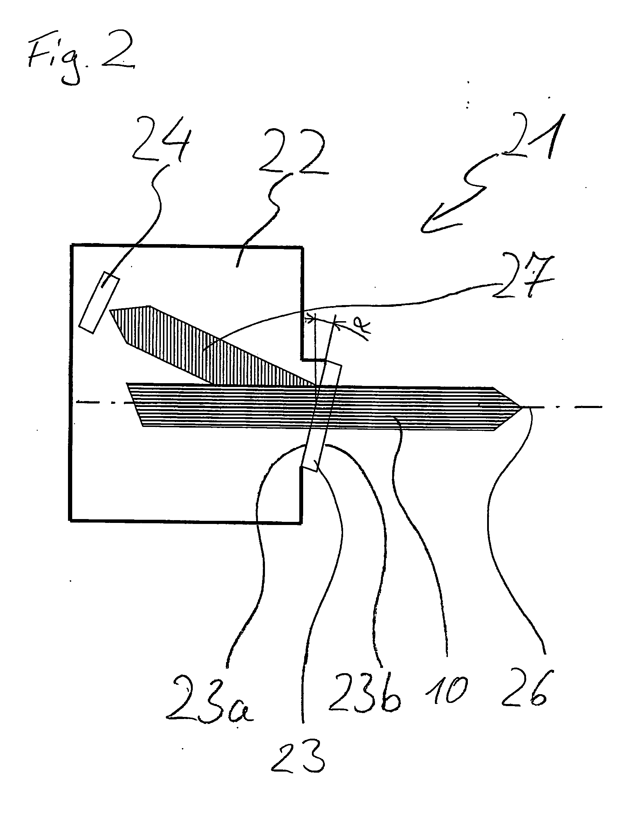

Fig. 2 zeigt eine prinzipielle Darstellung eines ersten Beispiels einer Vorrichtung 21 zur Verstärkung des Laserstrahls 10. Die Vorrichtung 21 weist eine Verstärkerkammer 22 auf, in der ein laseraktives Gas vorgesehen ist. In dieser Ausführungsform ist CO₂ als laseraktives Gas vorgesehen. In alternativen Ausführungsformen können auch andere Gase, wie z.B. Argon oder Krypton, oder auch Gasgemische, sowie ein Festkörperlaser vorgesehen sein.

Die Verstärkerkammer 22 ist prinzipiell wie der Laserresonator 2 aufgebaut. Hier wird allerdings der Laserstrahl 10 nicht erzeugt, sondern ein darin eingeleiteter Laserstrahl 10 verstärkt. Der Laserstrahl 10 weist eine optische Achse 26 auf. Die Vorrichtungen 21 zur Verstärkung des Laserstrahls 10 werden üblicherweise mit vier Verstärkerstufen ausgestattet. Je nach Bedarf und technischen Möglichkeiten könne aber auch mehr oder weniger Verstärkerstufen eingesetzt werden. Alternativ kann in der Verstärkerkammer 22 auch der Laserstrahl 10 erzeugt werden.

Die Verstärkerkammer 22 weist ein Abschlussfenster, das die Verstärkerkammer 22 begrenzt, als ein transmittierendes optisches Element 23, durch das der Laserstrahl 10 aus der Verstärkerkammer 22 austritt, auf. Ein nicht gezeigtes Abschlussfenster, durch das der Laserstrahl 10 in die Verstärkerkammer 22 eintritt, ist ebenfalls vorgesehen. Das transmittierende optische Element 23 ist in dieser Ausführungsform ein Diamantfenster. Das transmittierende optische Element 23 weist eine erste Oberfläche 23a und eine zweite Oberfläche 23b auf. Die erste Oberfläche 23a ist dem Laserstrahl 10 zugewandt und ist in dieser Ausführungsform zum Inneren der Verstärkerkammer 22 hin gerichtet. Die zweite Oberfläche 23b liegt der ersten Oberfläche 23a gegenüber.

Das transmittierende optische Element 23 ist so angeordnet, dass die erste Oberfläche 23a, die dem Laserstrahl 10 zugewandt ist, schräg gestellt ist und einen Kippwinkel α mit einer Ebene einschließt, die bezüglich der optischen Achse 26 des Laserstrahls 10 senkrecht ist. Der Kippwinkel α ist von 0° verschieden. Die Schrägstellung um den Kippwinkel α bewirkt, dass der Laserstrahl 10 an dem transmittierenden optischen Element 23 teilweise reflektiert wird und ein rückreflektierter Laserstrahl 27 erzeugt wird. Außerdem wird durch die Schrägstellung Selbstoszillation/Self-lasing verhindert. Der Winkel α beträgt in dieser Ausführungsform 3° ± 0,5°, kann alternativ aber von 1° bis zu 20° betragen. Der Winkel α darf maximal so groß sein, dass eine Polarisation eines zirkular polarisierten Laserstrahls nicht wesentlich verändert wird, und muss mindestens so groß sein, dass sich der rückreflektierte Laserstrahl 27 vom Laserstrahl 10 in einer gewissen Entfernung trennt.

Das Diamantfenster ist insbesondere für hohe Puls- und mittlere Leistungen geeignet. Anstelle eines Diamantfensters können alternativ auch andere geeignete Abschlussfenster vorgesehen sein. Beispielsweise ist könnte ein Abschlussfenster aus Zinkselenid verwendet werden.

Die erste Oberfläche 23a und die zweite Oberfläche 23b sind in dieser Ausführungsform frei von einer Beschichtung. Die erste Oberfläche 23a und/oder die zweite Oberfläche 23b können aber in alternativen Ausführungsformen mit einer Teilreflexionsbeschichtung, die nur einen kleinen Bruchteil des Laserstrahls 10 teilreflektiert, oder mit einer Antireflexionsbeschichtung beschichtet sein. Die Antireflexionsbeschichtung weist einen Rest-Reflexionsgrad von 0,01 bis 0,5% auf. Die erste Oberfläche 23a und die zweite Oberfläche 23b weisen in alternativen Ausführungsformen entweder gleiche oder unterschiedliche Reflexionsgrade auf. Durch unterschiedliche Reflexionsgrade kann der Kontrast von der einen Seite zu der anderen Seite erhöht werden. Bei fast planparallelen Fenstersubstraten treten sonst starke Interferenzstreifen auf, und bei starken Keilwinkeln der Fenster wären zwei Messpunkte zu beobachten. Außerdem können alternativ unterschiedliche Wellenlängen unterschiedlich reflektiert werden.

Die erste Oberfläche 23a und die zweite Oberfläche 23b sind in einer ebenen Form ausgebildet. In alternativen Ausführungsformen können die Oberflächen 23a, 23b auch so gekrümmt sein, dass sie nur den rückreflektierten Laserstrahl 27 beeinflussen. Wenn beispielsweise die Krümmungen gleich sind, wird nur der rückreflektierte Laserstrahl 27 beeinflusst (z.B. fokussiert). Wenn jedoch die Krümmungen unterschiedlich sind, werden der Laserstrahl 10 und der rückreflektierte Laserstrahl 27 unterschiedlich beeinflusst.

Die in Fig. 2 gezeigte Vorrichtung 21 weist weiterhin eine Detektionseinheit 24 auf. Der rückreflektierte Laserstrahl 27 wird durch die Schrägstellung des transmittierenden optischen Elements 23 gegenüber der optischen Achse 26 des Laserstrahls 10 zu der Detektionseinheit 24 gelenkt und durch die Detektionseinheit 24 analysiert.

In alternativen Ausführungsformen analysiert die Detektionseinheit 24 den rückreflektierten Laserstrahl 27 durch verschiedene Detektoren teilweise synchron. Beispielsweise wird eine mittlere Leistung und, mit Hilfe von schnellen Leistungsmessgeräten, eine Pulsleistung und eine Pulsenergie detektiert. Mit Hilfe von Kameras werden eine Modeform im Nahfeld und eine Modeform im Fernfeld detektiert. Durch eine Kamera oder einen Quadrantendetektor wird ein Pointing ermittelt. Eine Waveform wird mit einem Shack-Hartmann-Sensor detektiert. Die Detektoren der Detektionseinheit 24 benötigen nur eine sehr geringe Leistung. Somit können mit Hilfe eines Strahlteilers, der den rückreflektierten Laserstrahl 27 auf verschiedene Detektoren einer oder mehrerer Detektionseinheiten 24 aufteilt, mehrere Analysen gleichzeitig bedient werden.

Die Detektionseinheit 24 ist in der in Fig. 2 gezeigten Ausführungsform innerhalb der Verstärkerkammer 22 angeordnet.

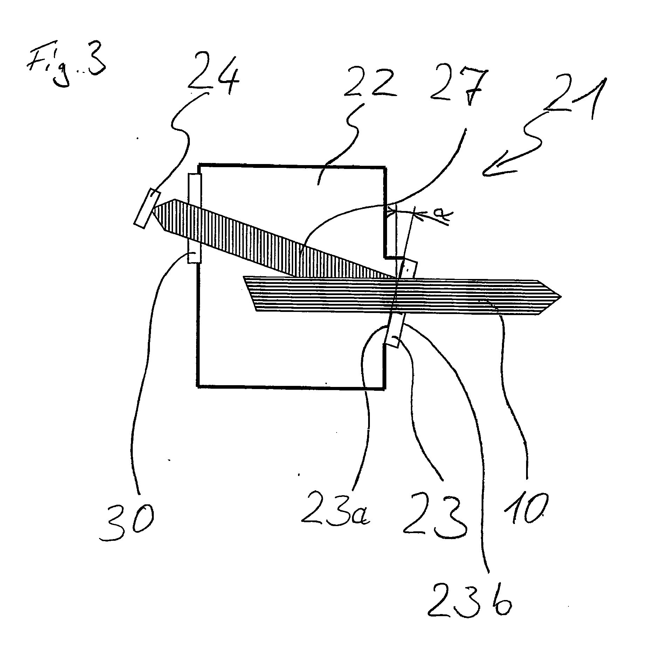

In Fig. 3 ist eine prinzipielle Darstellung eines zweiten Beispiels gezeigt. Die Detektionseinheit 24 ist hier außerhalb der Verstärkerkammer 22 angeordnet. Der rückreflektierte Laserstrahl 27, der auch in dieser Ausführungsform durch die Teilreflexion des Laserstrahls 10 an dem transmittierenden optischen Elements 23 erzeugt wird, tritt durch ein weiteres Fenster 30 aus der Verstärkerkammer 22 aus und wird durch die Detektionseinheit 24 analysiert.

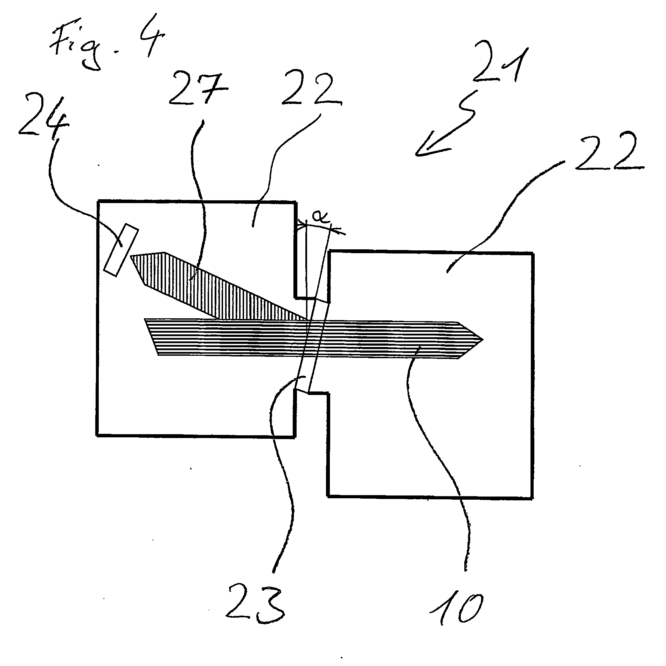

Ein in Fig. 4 gezeigtes drittes Beispiel der Vorrichtung 21 zeigt die Verstärkerkammer 22 der ersten Ausführungsform, in der der rückreflektierte Laserstrahl 27 auf die Detektionseinheit 24 innerhalb der Verstärkerkammer 22 gelenkt wird. Eine weitere Verstärkerkammer 22 ist hier benachbart vorgesehen. Die beiden Verstärkerkammern 22 sind so angeordnet, dass das transmittierende optische Element 23 für beide Verstärkerkammern 22 vorgesehen ist und diese voneinander abgrenzt. Der Laserstrahl 10 tritt durch das transmittierende optische Element 23 aus der einen Verstärkerkammer 22 aus und in eine weitere Verstärkerkammer 22 ein.

Die weitere Verstärkerkammer 22 der Vorrichtung 21 ist auch in dieser Ausführungsform mit dem laseraktiven Gas gefüllt und dient somit als eine weitere Verstärkerstufe.

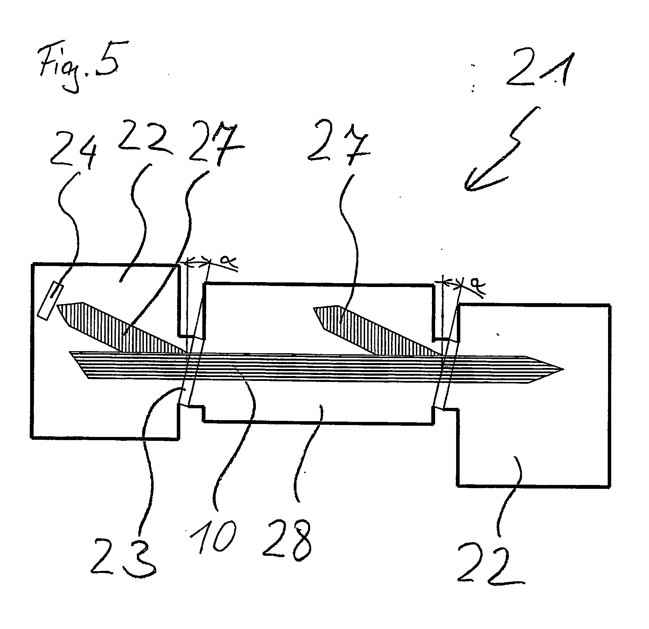

Wie in Fig. 5 als ein viertes Beispiel prinzipiell gezeigt, weist die Vorrichtung 21 zwei Verstärkerkammern 22 und eine weitere Kammer 28 auf. Der Laserstrahl 10, der bereits in der links dargestellten Verstärkerkammer 22 durch das transmittierende optische Element 23 teilreflektiert wird, so dass der rückreflektierte Laserstrahl 27 durch die zu dieser Verstärkerkammer 22 zugeordneten Detektionseinheit 24 analysiert wird, wird durch das transmittierende optische Element 23 zwischen der weiteren Kammer 28 und der rechts dargestellten Verstärkerkammer 22 ebenfalls teilreflektiert. So entsteht wiederum der rückreflektierte Laserstrahl 27, der wiederum durch die hier nicht gezeigte zugeordnete Detektionseinheit analysiert werden kann, so dass Veränderungen im Laserstrahl 10 erfasst werden können.

Die weitere Kammer 28 ist mit einer speziellen Gaszusammensetzung und/oder mit einem speziellen Gasdruck versehen sein, die sich von der Gaszusammensetzung oder dem Gasdruck der Verstärkerkammer 22 unterscheidet. Eine der weiteren Kammern 28 kann beispielsweise mit einem Spülgas vorgesehen sein, oder eine der weiteren Kammern 28 kann ein Vakuum aufweisen. Diese Kammer 28 dient dann entweder nur zum Weiterleiten des Laserstrahls 10, oder es sind aktive oder passive optische Elemente, wie beispielsweise fokussierende Spiegel, Raumfilter oder Umlenkspiegel, enthalten. Auch hier kann grundsätzlich der Laserstrahl 10 analysiert werden. In alternativen Ausführungsformen werden die Anzahl und Anordnung der Verstärkerkammern 22 und weiteren Kammern 28 gemäß den Anforderungen ausgewählt und angeordnet.

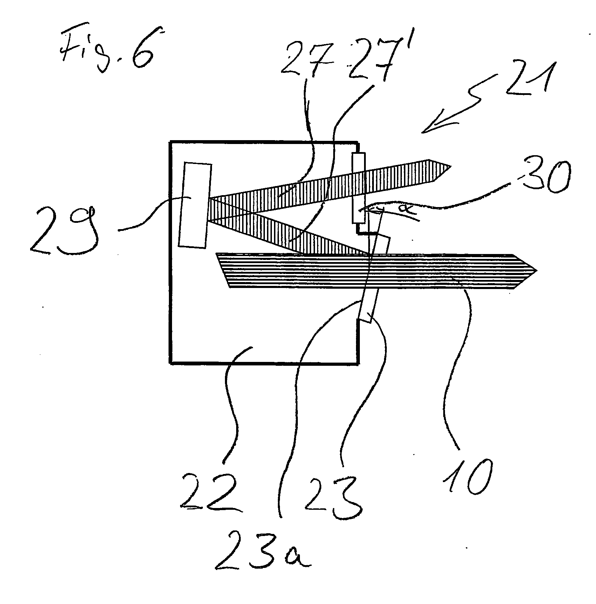

In Fig. 6 ist eine Ausführungsform der Vorrichtung 21 gezeigt. In dieser Ausführungsform ist innerhalb der Verstärkerkammer 22 ein Umlenkspiegel 29 vorgesehen. Durch den Umlenkspiegel 29 wird der rückreflektierte Laserstrahl 27 umgelenkt, so dass ein umgelenkter rückreflektierter Laserstrahl 27' erzeugt wird, durch das weitere Fenster 30 aus der Verstärkerkammer 22 austritt und dort durch die hier nicht gezeigte Detektionseinheit analysiert wird.

In alternativen Ausführungsformen können sowohl der Umlenkspiegel 29 als auch die Detektionseinheit 24 innerhalb oder außerhalb der Verstärkerkammer 22 oder einer der weiteren Kammern 28 angeordnet sein, wobei die rückreflektierten Laserstrahlen 27 dann durch weitere Fenster aus den Kammern 22, 28 austreten. In einer weiteren alternativen Ausführungsform kann der Umlenkspiegel 29 außerhalb einer der Kammern 22, 28 angeordnet sein und die Detektionseinheit innerhalb einer der Kammern 22, 28.

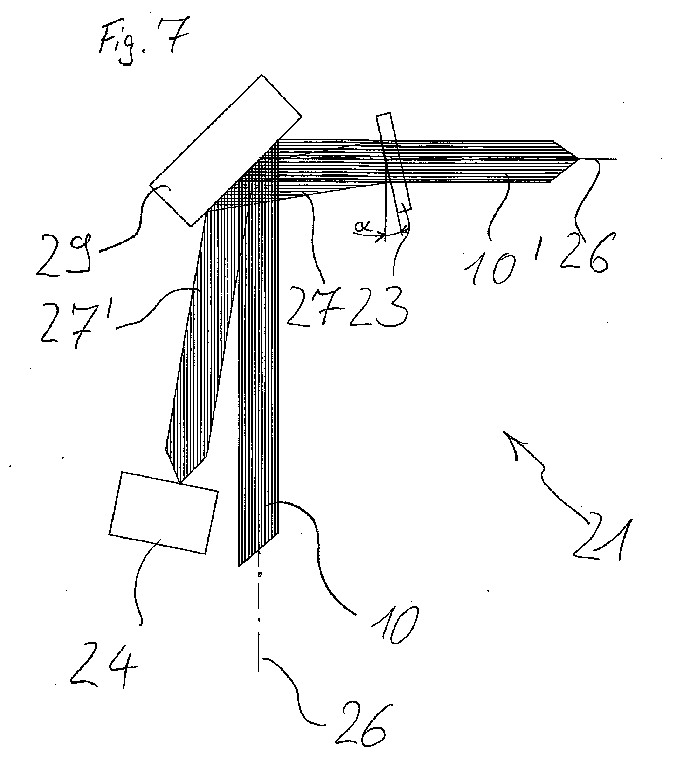

Fig. 7 zeigt eine prinzipielle Darstellung von Strahlengängen in der Vorrichtung 21. In dieser Ausführungsform wird der Laserstrahl 10 durch den Umlenkspiegel 29 umgelenkt, so dass ein umgelenkter Laserstrahl 10' entsteht. Der umgelenkte Laserstrahl 10' tritt dann durch das transmittierende optische Element 23. Dabei wird wiederum durch Teilreflexion der rückreflektierte Laserstrahl 27 erzeugt. Der rückreflektierte Laserstrahl 27 wird an dem Umlenkspiegel 29, an dem auch der Laserstrahl 10 umgelenkt wird, umgelenkt und ein umgelenkter rückreflektierter Laserstrahl 27' wird zu der Detektionseinheit 24 gelenkt. Dies ist insbesondere bei kleinen Winkeln α und der damit einhergehenden nur langsamen Separation des Laserstrahls 10 und des rückreflektierten Laserstrahls 27 vorteilhaft. Je größer der Winkel α ist, desto größer muss die Fläche des Umlenkspiegels 29 sein. Kleine Winkel α haben deswegen den Vorteil, dass die Fläche des Umlenkspiegels 29 ebenfalls klein sein kann.

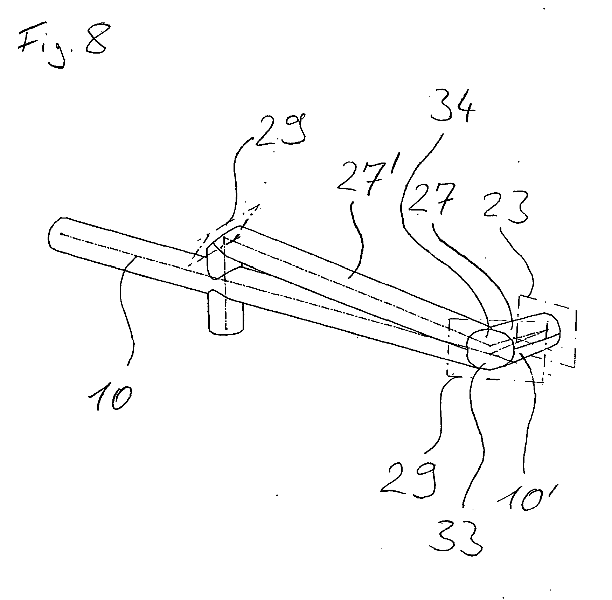

Fig. 8 zeigt einen Verlauf der Laserstrahlen in einer weiteren Ausführungsform der Vorrichtung. Die Umlenkspiegel 29 und das transmittierende optische Element 23 sind in dieser Figur nur prinzipiell dargestellt.

Auch hier wird der Laserstrahl 10 durch den Umlenkspiegel 29 in den umgelenkten Laserstrahl 10' zu dem transmittierenden Element 23 hin umgelenkt. In dieser Ausführungsform ist das transmittierende optische Element 23 so geneigt, dass eine Ebene, die durch den umgelenkten Laserstrahl 10' und den rückreflektierten Laserstrahl 27 gebildet wird, senkrecht zu einer Umlenkebene, die durch den Laserstrahl 10 und den umgelenkten Laserstrahl 10' gebildet wird, liegt. Der Laserstrahl 10 wird innerhalb einer nahezu elliptischen ersten Fläche 33 umgelenkt. Der rückreflektierte Laserstrahl 27 wird an einer zweiten nahezu elliptischen Fläche 34 umgelenkt. Da die Ebene, die durch den umgelenkten Laserstrahl 10' und den rückreflektierten Laserstrahl 27 gebildet wird, senkrecht zur Umlenkebene, die durch den Laserstrahl 10 und den umgelenkten Laserstrahl 10' gebildet wird, liegt, liegen die Ellipsen entlang ihrer Nebenachsen übereinander. Somit trifft der rückreflektierte Laserstrahl 27 außerhalb der Umlenkebene auf den Umlenkspiegel 29. Durch das Übereinanderliegen entlang der Nebenachsen muss die Abmessung, in diesem Fall ein Durchmesser, des Umlenkspiegels 29 nur wenig größer sein als in dem Fall, in dem der rückreflektierte Laserstrahl 27 nicht über den selben Umlenkspiegel 29 umgelenkt wird wie der Laserstrahl 10.

Liegt in einer nicht gezeigten alternativen Ausführungsform die Ebene, die durch den umgelenkten Laserstrahl 10' und den rückreflektierten Laserstrahl 27 gebildet wird, in der Umlenkebene, die durch den Laserstrahl 10 und den umgelenkten Laserstrahl 10' gebildet wird, so liegen die Ellipsen entlang ihrer Hauptachsen nebeneinander. In diesem Fall muss die Abmessung des Spiegels sehr viel größer sein, als bei der oben beschriebenen Ausführungsform.

In der in Fig. 8 gezeigten Ausführungsform ist ein rundes Substrat ausreichend. Je kleiner der Durchmesser des Umlenkspiegels 29 ist, desto leichter lässt sich dieser herstellen und handhaben. Auch können der Umlenkspiegel 29 und das transmittierende optische Element 23 eine konstruktiv kompakte Einheit bilden.

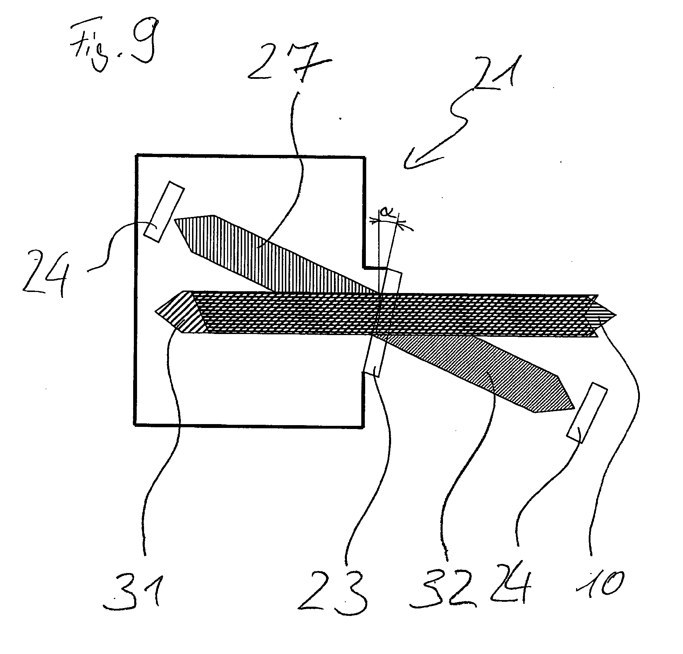

Fig. 9 ist eine prinzipielle Darstellung eines weiteren Beispiels der Vorrichtung 21. Beim Einsatz von Lasern ist es möglich, dass zusätzlich zu dem gewünschten vorwärts laufenden Laserstrahl 10, bedingt durch Reflexionen, auch ein ungewünschter zweiter, rückwärts laufender Laserstrahl 31 auftritt. Der rückwärts laufende Laserstrahl 31 wird, bedingt durch die Schrägstellung des transmittierenden optischen Elements 23, ebenfalls teilreflektiert, so dass ein zweiter rückreflektierter Strahl 32 entsteht. Der zweite rückreflektierte Strahl 32 wird durch das transmittierende optische Element 23 zu einer der von den Detektionseinheiten 24 für den vorwärts laufenden Laserstrahl 10 unabhängigen und separaten Detektionseinheit 24 gelenkt.

Die Anordnung und das Lenken des zweiten rückreflektierten Strahls 32 kann alternativ analog zu alternativen Ausführungsformen für das Leiten und Lenken des rückreflektierten Strahls 27 erfolgen.

## Patentansprüche

1. Vorrichtung (21) zur Verstärkung eines Laserstrahls (10), aufweisend:
mindestens eine Verstärkerkammer (22) mit einem laseraktiven Material darin,
mindestens ein transmittierendes optisches Element (23), das die mindestens eine Verstärkerkammer (22) begrenzt und das bezüglich einer senkrecht zu einer optischen Achse (26) des Laserstrahls (10) orientierten Ebene unter einem Kippwinkel (α) angeordnet ist,
und eine Detektionseinheit (24), die so angeordnet ist, dass sie einen an dem transmittierenden optischen Element (23) rückreflektierten Laserstrahl (27) erfasst **dadurch gekennzeichnet, dass**
mindestens ein Umlenkspiegel (29) vorgesehen ist, der den rückreflektierten Laserstrahl (27) auf die Detektionseinheit (24) umlenkt, und
dass einer der Umlenkspiegel (29) in einer der Verstärkerkammern (22) angeordnet ist.

2. Vorrichtung (21) gemäß Anspruch 1, wobei das laseraktive Material ein laseraktives Gas, insbesondere CO₂, ist.

3. Vorrichtung (21) gemäß Anspruch 1 oder 2, wobei die Detektionseinheit (24) außerhalb der mindestens einen Verstärkerkammer (22) angeordnet ist.

4. Vorrichtung (21) gemäß einem der vorangehenden Ansprüche, wobei mindestens eine weitere Verstärkerkammer (22) oder mindestens eine weitere Kammer (28), die eine Gaszusammensetzung und/oder einen Druck aufweist, der sich von der Gaszusammensetzung und/oder dem Druck in der Verstärkerkammer (22) unterscheidet, vorgesehen ist.

5. Vorrichtung (21) gemäß einem der vorangehenden Ansprüche, wobei das mindestens eine transmittierende optische Element (23) die mindestens eine Verstärkerkammer (22) von einer unmittelbar benachbarten Verstärkerkammer (22) oder einer weiteren Kammer (28) abgrenzt.

6. Vorrichtung (21) gemäß Anspruch 4 oder 5, wobei einer der Umlenkspiegel (29) in einer der weiteren Kammern (28) angeordnet ist.

7. Vorrichtung (21) gemäß einem der vorangehenden Ansprüche, wobei der Umlenkspiegel (29) so angeordnet ist, dass er sowohl den rückreflektierten Laserstrahl (27) als auch den Laserstrahl (10) umlenkt.

8. Vorrichtung (21) gemäß Anspruch 7 wobei der Laserstrahl (10) und der umgelenkte Laserstrahl (10') eine Umlenkebene bilden, und das transmittierende optische Element (23) so angeordnet ist, dass der rückreflektierte Laserstrahl (27) außerhalb der Umlenkebene auf den Umlenkspiegel (29) auftrifft.

9. Vorrichtung (21) gemäß einem der vorangehenden Ansprüche, wobei ein zweiter Laserstrahl (31) in einer zu dem Laserstrahl (10) entgegen gesetzten Richtung verläuft, und der zweite Laserstrahl (31) durch das transmittierende optische Element (23) teilreflektiert wird und von einer weiteren Detektionseinheit (24) erfasst wird.

10. Vorrichtung (21) gemäß einem der vorhergehenden Ansprüche, wobei mindestens eines der transmittierenden optischen Elemente (23) an mindestens einer ersten Oberfläche (23a) eine erste Antireflexionsbeschichtung aufweist.

11. Vorrichtung (21) gemäß Anspruch 10, wobei das transmittierende optische Element (23) an einer zweiten Oberfläche (23b) eine zweite Antireflexionsbeschichtung aufweist, und die erste Antireflexionsbeschichtung und die zweite Antireflexionsbeschichtung unterschiedliche Reflexionsgrade aufweisen.

12. Vorrichtung (21) gemäß Anspruch 11, wobei das transmittierende optische Element (23) an einer zweiten Oberfläche (23b) eine zweite Antireflexionsbeschichtung aufweist, und die erste Antireflexionsbeschichtung und die zweite Antireflexionsbeschichtung gleiche Reflexionsgrade aufweisen.

13. Vorrichtung (21) gemäß einem der Ansprüche 10 bis 12, wobei die erste und/oder zweite Antireflexionsbeschichtung einen Rest-Reflexionsgrad von mindestens 0,01 bis höchstens 0,5 % aufweist.

## Claims

1. Device (21) for amplifying a laser beam (10) comprising:
at least one amplifier chamber (22) with a laser-active material therein,
at least one transmitting optical member (23) delimiting the at least one amplifier chamber (22) and being arranged at a tilt angle (α) with respect to a plane oriented perpendicular to an optical axis (26) of the laser beam (10),
and a detection unit (24) being arranged such that it detects a laser beam (27) back reflected at the transmitting optical member (23),
**characterized in that**
at least one deflection mirror (29) deflecting the back reflected laser beam (27) onto the detection unit (24) is provided, and
one of the deflection mirrors (29) is arranged in one of the amplifier chambers (22).

2. Device (21) according to claim 1, wherein the laser-active material is a laser-active gas, in particular CO₂.

3. Device (21) according to claim 1 or 2, wherein the detection unit (24) is arranged outside the at least one amplifier chamber (22).

4. Device (21) according to any of the preceding claims, wherein at least one additional amplifier chamber (22), or at least one additional chamber (28), comprising a gas composition and/or a pressure different from the gas composition and/or the pressure in the amplifier chamber (22) is provided.

5. Device (21) according to any of the preceding claims, wherein the at least one transmitting optical member (23) delimits the at least one amplifier chamber (22) from a directly adjacent amplifier chamber (22) or from an additional chamber (28).

6. Device (21) according to claim 4 or 5, wherein one of the deflection mirrors (29) is arranged in one of the additional chambers (28).

7. Device (21) according to any of the preceding claims, wherein the deflection mirror (29) is arranged such that it deflects both the back reflected laser beam (27) and the laser beam (10).

8. Device (21) according to claim 7, wherein the laser beam (10) and the deflected laser beam (10') form a deflection plane, and the transmitting optical member (23) is arranged such that the back reflected laser beam (27) impinges onto the deflection mirror (29) outside the deflection plane.

9. Device (21) according to any of the preceding claims, wherein a second laser beam (31) goes in a direction opposite to the laser beam (10), and the second laser beam (31) is partially reflected by the transmitting optical member (23) and it is detected by a further detection unit (24).

10. Device (21) according to any of the preceding claims, wherein at least one of the transmitting optical members (23) comprises a first anti-reflection coating on at least a first surface (23a).

11. Device (21) according to claim 10, wherein the transmitting optical member (23) comprises a second anti-reflection coating on a second surface (23b), and the first anti-reflection coating and the second anti-reflection coating have different degrees of reflection.

12. Device (21) according to claim 11, wherein the transmitting optical member (23) comprises a second anti-reflection coating on a second surface (23b), and the first anti-reflection coating and the second anti-reflection coating have identical degrees of reflection.

13. Device (21) according to any of the claims 10 to 12, wherein the first and/or the second anti-reflection coating has a remaining degree of reflection of 0.01 % at the minimum and 0.5 % at the maximum.

## Revendications

1. Dispositif (21) d'amplification d'un faisceau laser (10) comprenant :
au moins une chambre d'amplification (22) renfermant un matériau à activité laser,
au moins un élément optique de transmission (23) qui limite la chambre d'amplification (22) et qui est monté sous un angle de basculement (α) par rapport à un plan orienté perpendiculairement à l'axe optique (26) du faisceau laser (10), et
une unité de détection (24) qui est montée de façon à détecter un faisceau laser (27) rétro-réfléchi en retour sur l'élément optique de transmission (23),
**caractérisé en ce qu'**
il est prévu au moins un miroir de renvoi (29) qui renvoit le faisceau laser (27) rétro-réfléchi sur l'unité de réception (24), et
l'un des miroirs de renvoi (29) est monté dans l'une des chambres d'amplification (22).

2. Dispositif (21) conforme à la revendication 1, dans lequel le matériau à activité laser est un gaz à activité laser, en particulier CO₂.

3. Dispositif (21) conforme à la revendication 1 ou 2, dans lequel l'unité de détection (24) est montée à l'extérieur de la chambre d'amplification (22).

4. Dispositif (21) conforme à l'une des revendications précédentes, dans lequel il est prévu au moins une autre chambre d'amplification (22) ou au moins une autre chambre (28) qui présente une composition de gaz et/ou une pression qui diffère de la composition de gaz et/ou de la pression de la chambre d'amplification (22).

5. Dispositif (21) conforme à l'une des revendications précédentes, dans lequel l'élément optique de transmission (23) limite la chambre d'amplification (22) d'une chambre d'amplification (22) ou d'une autre chambre (28) immédiatement voisine.

6. Dispositif (21) conforme à la revendication 4 ou 5, dans lequel l'un des miroirs de renvoi (29) est monté dans l'une des autres chambres (28).

7. Dispositif (21) conforme à l'une des revendications précédentes, dans lequel le miroir de renvoi (29) est monté de façon à renvoyer le faisceau laser rétro-réfléchi (27) ainsi que le faisceau laser (10).

8. Dispositif (21) conforme à la revendication 7 dans lequel le faisceau laser (10) et le faisceau laser renvoyé (10') définissent un plan de renvoi et l'élément optique de transmission (23) est monté de sorte que le faisceau laser rétro-réfléchi (27) vienne en incidence sur le miroir de renvoi (29) à l'extérieur du plan de renvoi.

9. Dispositif (21) conforme à l'une des revendications précédentes, dans lequel un second faisceau laser (31) se propage dans une direction située à l'opposé du faisceau laser (10) et ce second faisceau laser (31) est partiellement réfléchi au travers de l'élément optique de transmission (23) et est détecté par une autre unité de détection (24).

10. Dispositif (21) conforme à l'une des revendications précédentes dans lequel au moins l'un des éléments optiques de transmission (23) comporte un premier revêtement anti-réfléchissant sur au moins une première surface (23a).

11. Dispositif (21) conforme à la revendication 10, dans lequel l'élément optique de transmission (23) comprend un second revêtement anti-réfléchissant sur une seconde surface (23b), et le premier revêtement anti-réfléchissant et le second revêtement anti-réfléchissant ont des facteurs de réflexion différents.

12. Dispositif (21) conforme à la revendication 11, dans lequel l'élément optique de transmission (23) comprend un second revêtement anti-réfléchissant sur une seconde surface (23b), et le premier revêtement anti-réfléchissant et le second revêtement anti-réfléchissant ont le même facteur taux de réflexion.

13. Dispositif (21) conforme à l'une des revendications 10 à 12, dans lequel le premier et/ou le second revêtement anti-réfléchissant a(ont) un facteur de réflexion résiduel d'au moins 0,01 jusqu'à au plus 0,5 %.
